# EUROPÄISCHE PATENTSCHRIFT

(11) **EP 1 413 386 B1**
(45) Veröffentlichungstag und Bekanntmachung des Hinweises auf die Patenterteilung: **01.06.2005**
(21) Anmeldenummer: 03400010.9
(22) Anmeldetag: 03.04.2003
(51) Int. Cl.: B23P 19/02, B25B 27/02, B25B 27/06

(54) **Einpressvorrichtung mit hämmernder Schlagvorrichtung**
Press-fitting apparatus with hammering device
Appareil d'emmanchement avec dispositif de martellement

(30) Priorität: 22.10.2002 DE 20216310 U
(43) Veröffentlichungstag der Anmeldung: 28.04.2004
(73) Patentinhaber: Bayer GmbH Maschinenfabrik, 73730 Esslingen (DE)
(72) Erfinder: Bayer, Werner, 73732 Esslingen (DE)
(74) Vertreter: Abel, Martin

(56) Entgegenhaltungen:
- EP-A- 0 728 557
- WO-A-00/64627
- PATENT ABSTRACTS OF JAPAN vol. 018, no. 633 (M-1714), 2. Dezember 1994 (1994-12-02) & JP 06 246552 A (MITSUBISHI MOTORS CORP), 6. September 1994 (1994-09-06)

## Beschreibung

Die Erfindung betrifft eine Einpressvorrichtung zum Einpressen eines insbesondere von einem Ventilsitzring gebildeten Einsatzteils in eine Ausnehmung eines insbesondere von einem Zylinderkopfkörper gebildeten Werkstücks, mit einer Drückvorrichtung, die einen Drückantrieb enthält und eine durch den Drückantrieb zu einer Drückbewegung in einer Einpressrichtung antreibbare Drückeinheit aufweist, die drückend auf eine Presspinole einwirken kann, an der das einzupressende Einsatzteil fixierbar ist, und mit einer Schlagvorrichtung zum Ausüben von Schlägen auf die relativ zur Drückeinheit in der Einpressrichtung bewegbare Presspinole zur Unterstützung des Einpressvorganges, gemäss dem Oberbegriff des Anspruchs 1 (siehe z.B., WO-00/64627-A).

In der Fertigungs- und/oder Montagetechnik tritt häufig die Problemstellung auf, ein Einsatzteil in eine Ausnehmung eines Werkstückes einzupressen. So werden beispielsweise bei der Fertigung von Zylinderköpfen für Kraftfahrzeuge die Ventilsitzringe in zugehörige Aufnahmen des Zylinderkopfkörpers eingepresst. Die gewünschte Einpresstiefe wird hier durch die ringförmige Grundfläche der Ausnehmung vorgegeben. Damit sich das Ventilspiel beim späteren Betrieb des Zylinderkopfes nicht verändert, muss bei der Einpressmontage der Ventilsitzringe sichergestellt werden, dass diese satt an der Grundfläche der Ausnehmung des Zylinderkopfkörpers anliegen.

Nach interner Kenntnis der Anmelderin existiert bereits eine Einpressvorrichtung, die sich mit dieser Problematik befasst. Diese verfügt über eine Presspinole, an der eine Aufnahme zur lösbaren Fixierung des einzupressenden Ventilsitzringes vorgesehen ist und die durch eine Drückeinheit beaufschlagt werden kann, die von der Kolbenstange oder einer damit verbundenen Komponente eines Hydraulikzylinders gebildet ist. Im Betrieb wirkt die Drückeinheit durch Betätigung des Hydraulikzylinders zunächst drückend auf die Presspinole ein und verlagert diese, sodass der aufgenommene Ventilsitzring in eine gegenüberliegend positionierte Ausnehmung eines Zylinderkopfes eingepresst wird. Nach Beendigung dieses Drückvorganges wird der Hydraulikzylinder derart periodisch angesteuert, dass die mit einer Trägheitsmasse bestückte und folglich als Hammerkörper fungierende Drückeinheit hämmernd auf die Presspinole einwirkt und somit den Ventilsitzring vollends zur Anlage an der Grundfläche der Ausnehmung bringt.

Ein großer Nachteil dieser bekannten Einpressvorrichtung besteht darin, dass die die einzelnen Komponenten tragende Halterung sehr hohen Belastungen ausgesetzt ist. In der Regel muss die Halterung in besonderer Weise umfangreich abgestützt oder mittels Zugankern fixiert werden, um Verformungen zu vermeiden. Ursache hierfür ist vor allem die hohe Kraft, mit der der Hydraulikzylinder insbesondere auch beim Hämmern auf die Presspinole einwirkt.

Es ist die Aufgabe der vorliegenden Erfindung, eine Einpressvorrichtung der eingangs genannten Art zu schaffen, die einen relativ einfachen Aufbau hat und die Gesamtstruktur beim Betrieb weniger stark belastet.

Zur Lösung dieser Aufgabe ist vorgesehen, dass die Presspinole an der Drückeinheit gelagert ist.

Für die beim Einpressen stattfindenden Drück- und Hämmervorgänge sind zwei gesonderte, unabhängig voneinander betreibbare Antriebe vorgesehen, wobei der für das Hämmern zuständige Schlagantrieb mit der Drückeinheit bewegungsgekoppelt ist und insbesondere in oder an der Drückeinheit angeordnet ist. Während der Drückphase des Einpressvorganges wird die Schlagvorrichtung kraftflussmäßig überbrückt und wirkt die Drückeinheit direkt auf die Presspinole, die folglich das Einsatzteil in die zugeordnete Ausnehmung einpresst. Am Ende des Drückvorganges kann durch den Schlagantrieb ein Nachhämmern erfolgen, wobei die Drückeinheit stillstehen kann und lediglich der Abstützung des Schlagantriebes dient, bei dessen Betätigung der Hammerkörper eine hin- und hergehende Schlagbewegung relativ zur Drückeinheit ausführt und bei seinem Aufprall auf die Presspinole starke Impulse verursacht, die ein sicheres Endeinpressen des Einsatzteils bis zur Anlage an einer gegebenenfalls vorhandenen Grundfläche der Ausnehmung sicherstellt. Bedingt durch die Ausgestaltung als Pneumatikantrieb kann der Schlagantrieb mit hoher Frequenz betrieben werden - es kann sich beispielsweise um einen Kurzhub-Pneumatikzylinder handeln - wobei er in der Lage ist, in Verbindung mit einer entsprechend hohen Masse des Hammerkörpers trotz geringer Kraft einen sehr hohen Schlagimpuls zu erzeugen. Insgesamt wird somit die Struktur der Einpressvorrichtung weniger stark beansprucht, und es vereinfachen sich auch die Maßnahmen zur Aussteifung oder Abstützung einer vorhandenen Halterung.

Vorteilhafte Weiterbildungen der Erfindung gehen aus den Unteransprüchen hervor.

Da der Drückantrieb nicht als Schlagantrieb fungiert, kann er mit geringerer Betätigungskraft ausgebildet werden, was kleinere Baugrößen und somit kompaktere Abmessungen zulässt. Es besteht überdies die vorteilhafte Möglichkeit, den Drückantrieb anstatt als Hydraulikantrieb in Gestalt eines elektrischen Antriebes auszubilden, insbesondere in servomotorischer Bauweise, was den Gesamtaufbau weiter vereinfacht und insbesondere auch eine flexiblere und genauere Positionierung zulässt.

Die Schlagvorrichtung kann komplett in die Drückeinheit integriert sein. In Verbindung mit einer Hintereinander-Anordnung von Presspinole, Hammerkörper und pneumatischem Schlagantrieb gestattet dies eine besonders schlanke Bauweise.

Der pneumatische Schlagantrieb kann eine gesonderte Komponente sein, beispielsweise ein handelsüblich erhältlicher Pneumatikzylinder, vorzugsweise ein Kurzhub-Pneumatikzylinder. Es besteht jedoch auch die vorteilhafte Möglichkeit, den Schlagantrieb so in die Drückeinheit zu integrieren, dass die Drückeinheit selbst das Gehäuse des Schlagantriebes bildet.

Zugunsten eines präzisen Einpressvorganges ist die Einpressvorrichtung zweckmäßigerweise mit einer Halterung ausgestattet, an der der Drückantrieb befestigt ist und an der die Drückeinheit mittels einer Linearführung in und entgegen der Einpressrichtung verstellbar geführt ist.

In der Regel wird das Einsatzteil soweit in die Aufnahme eines Werkstückes eingepresst, bis es sich in einer Anlageposition befindet, in der es an einer meist ringförmigen Grundfläche der Aufnahme satt anliegt. Um diesen Zustand zu erreichen, kann bei einer einfacheren Bauform der Einpressvorrichtung die Anzahl der während der Hämmerphase auszuführenden Hämmerzyklen entsprechend vorher ermittelten Erfahrungswerten vorgegeben werden. Aus Sicherheitsgründen wird man hierbei jedoch regelmäßig eine die im konkreten Fall tatsächlich erforderliche Anzahl von Hämmerzyklen überschreitende Anzahl von Hämmerzyklen vorsehen. Dies führt naturgemäß zu einer Hämmerphase, die länger andauert als eigentlich notwendig. Zur Zeiteinsparung ist es daher vorteilhafter, die Einpressvorrichtung mit Sensormitteln auszustatten, die in der Lage sind, den Zeitpunkt des Erreichens der gewünschten Anlageposition zuverlässig zu erfassen, sodass der Hämmervorgang anschließend abgebrochen werden kann und unnötige weitere Hämmerzyklen vermieden werden. Diese Sensormittel arbeiten insbesondere auf akustischer Basis oder auf der Basis einer Wi-derstandsmessung.

Nachfolgend wird die Erfindung anhand der beiliegenden Zeichnung näher erläutert. In dieser zeigen:
- Figur 1: eine bevorzugte Bauform der erfindungsgemäßen Einpressvorrichtung in Seitenansicht und teilweise im Längsschnitt sowie in vereinfachter Darstellungweise, wobei der Drückantrieb nicht vollständig gezeigt ist und wobei sich die Einpressvorrichtung in einer Grundstellung befindet,
- Figur 2: die Einpressvorrichtung aus Figur 1 in einer Stellung gegen Ende der durch den Drückantriebverursachten Drückphase und
- Figur 3: die Einpressvorrichtung aus Figur 1 während der Hämmerphase als Abschluss des Einpressvorganges.

Die Zeichnung zeigt eine insgesamt mit Bezugsziffer 1 bezeichnete Einpressvorrichtung, die geeignet ist, um ein insbesondere ringförmiges Einsatzteil 2 in eine entsprechend angepasste Ausnehmung 3 eines Werkstückes 4 einzupressen und somit kraftschlüssig in der Ausnehmung 3 zu fixieren.

Die weitere Erläuterung des Aufbaues und der Funktionsweise der Einpressvorrichtung 1 soll anhand eines Anwendungsfalles erfolgen, bei dem das Werkstück 4 ein Zylinderkopfkörper für den Motor eines Kraftfahrzeuges ist und es sich bei dem Einsatzteil 2 um einen Ventilsitzring handelt, der in eine Ausnehmung 3 des Zylinderkopfkörpers 4 einzupressen ist, die eine zylindrische Umfangsfläche 5 und eine der Öffnung zugewandte ringförmige Grundfläche 6 aufweist. In koaxialer Verlängerung der Ausnehmung 3 ist in dem Zylinderkopfkörper 4 ein Führungskanal 7 ausgebildet, der später zur Führung eines Ventilschaftes dient.

Die Einpressvorrichtung 1 verfügt über eine Halterung 8 mit Abstützmitteln 12, an denen sich das Werkstück 4 während des Einpressvorganges abstützen kann. Ebenfalls vorhandene Befestigungsmittel zur Fixierung des Werkstückes 4 sind nicht näher dargestellt.

Den Abstützmitteln 12 gegenüberliegend ist die Halterung 8 mit einem Träger 13 versehen. Zwischen den Abstützmitteln 12 und dem Träger 13 verfügt die Halterung 8 über eine Linearführung 11.

Die Einpressvorrichtung 1 ist mit einer insgesamt mit Bezugsziffer 14 versehenen Drückvorrichtung ausgestattet, die unter anderem einen an dem Träger 13 befestigten Drückantrieb 15 enthält. Letzterer könnte prinzipiell ein Hydraulikantrieb sein, ist beim Ausführungsbeispiel jedoch von einem elektrischen Antrieb, insbesondere einem Servomotorantrieb, gebildet.

Der Drückantrieb 15 ist mit einem Gehäuse 16 an dem Träger 13 befestigt. Er hat ein beispielsweise in Pinolenform ausgeführtes Antriebsteil 17, das elektromotorisch zu einer durch einen Doppelpfeil angedeuteten linearen Antriebsbewegung 18 relativ zum Gehäuse 16 veranlasst werden kann.

An dem Antriebsteil 17 ist eine Drückeinheit 22 befestigt. Diese ist an der Linearführung 11 abgestützt und verschiebbar geführt. Entsprechend der Aktivierung des Drückantriebes 15 führt die Drückeinheit 22 eine Drückbewegung in einer durch einen Pfeil angedeuteten Einpressrichtung 23 oder eine Rückzugsbewegung aus. Sie macht dabei die entsprechende Linearbewegung des Antriebsteils 17 in die eine oder andere Richtung mit.

Die Drückeinheit 22 ist mit ihrer Rückseite am Antriebsteil 17 des Drückantriebes 15 befestigt. An ihrer entgegengesetzten, dem zu bearbeitenden Werkstück 4 zugewandten Vorderseite trägt sie eine als separate Komponente ausgebildete Presspinole 24.

Die als längliches, wellenartiges Bauteil ausgeführte Presspinole 24 ist mit einem rückseitigen Lagerabschnitt 25 in einer Führungsbohrung 26 der Drückeinheit 22 verschiebbar gelagert. Die möglichen Verschieberichtungen fallen mit der Längsachse 27 der Drückeinheit 22 zusammen.

Der Drückeinheit 22 zum zu bearbeitenden Werkstück 4 hin vorgelagert ist die Presspinole 24 mit einer abgestuften Aufnahme 28 versehen, auf die das einzupressende ringförmige Einsatzteil aufsteckbar ist. Die Aufnahme 28 hat einen zylindrischen Zentrierfortsatz 32, auf dem das aufgesteckte Einsatzteil 2 koaxial sitzt. Außerdem ist sie mit einer nach vorne weisenden ringförmigen Abstützfläche 33 versehen, an der sich das Einsatzteil 2 entgegen der Einpressrichtung 23 abstützen kann. Im Bereich der Aufnahme 28 kann die Presspinole 24 mit einer Dauermagneteinrichtung 31 ausgestattet sein, um das jeweils aufgesteckte Einsatzteil 2 lösbar zu fixieren.

Die gesamte Anordnung ist so ausgerichtet, dass die Längsachse 27 der Drückeinheit 22, die Längsachse 34 der Presspinole 24 und die Längsachse 35 der zu bestückenden Ausnehmung 3 des Werkstückes 4 zusammenfallen.

An der Presspinole ist eine entgegen der Einpressrichtung 23 weisende erste Beaufschlagungsfläche 36 vorgesehen. Sie befindet sich beim Ausführungsbeispiel an einem der Drückeinheit 22 in Einpressrichtung 23 vorgelagerten Ringbund 37 der Presspinole 24.

Der ersten Beaufschlagungsfläche 36 ist eine in der Einpressrichtung 23 orientierte Drückfläche 38 zugewandt, die an der Drückeinheit 22 angeordnet ist und beim Ausführungsbeispiel von der vorderen Stirnfläche der Drückeinheit 22 gebildet wird.

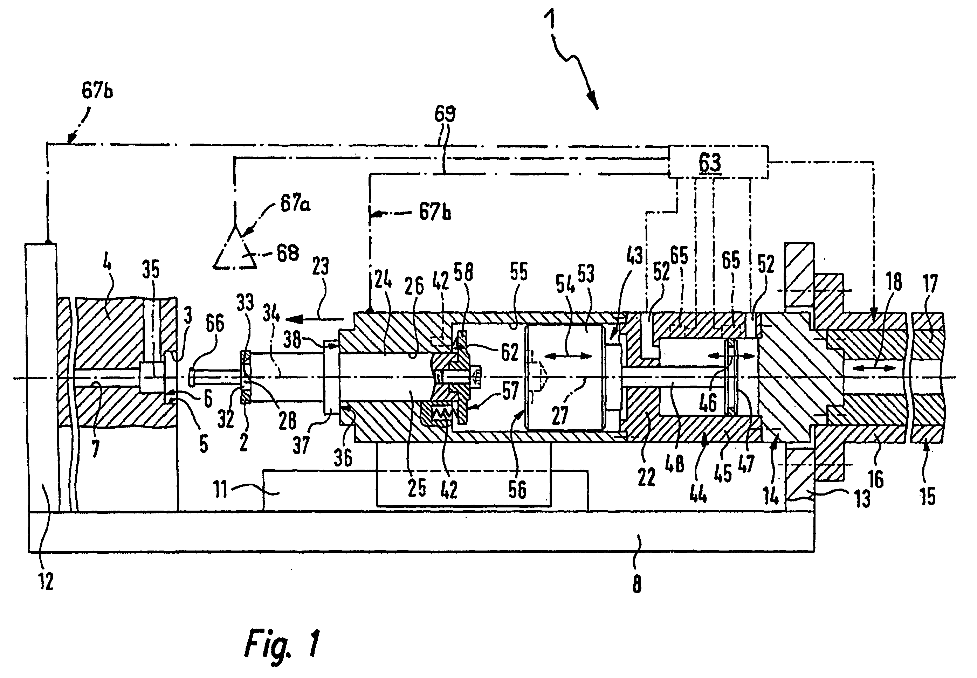

Zwischen der Drückeinheit 22 und der Presspinole 24 ist eine beim Ausführungsbeispiel aus zwei gesonderten Druckfedern bestehende Federeinrichtung 42 platziert. Sie stützt sich zum einen an der Drückeinheit 22 und zum anderen an der Presspinole 24 ab, wobei sie letztere im Sinne einer Annäherung der ersten Beaufschlagungsfläche 36 an die Drückfläche 38 beaufschlagt. In der aus Figur 1 hervorgehenden Grundstellung liegt die erste Beaufschlagungsfläche 36 aufgrund der Stellkraft der Federeinrichtung 42 an der Drückfläche 38 der Drückeinheit 22 an.

Die Einpressvorrichtung 1 ist zusätzlich zu der Drückvorrichtung 14 mit einer Schlagvorrichtung 43 ausgestattet, die an oder in der Drückeinheit 22 sitzt.

Die Schlagvorrichtung 43 verfügt zum einen über einen von dem Drückantrieb 15 unabhängigen, eigenständigen pneumatischen Schlagantrieb 44, der mit der Drückeinheit 22 bewegungsgekoppelt ist. Dieser Schlagantrieb 44 ist beim Ausführungsbeispiel ein Pneumatikzylinder mit einem in einem Zylindergehäuse 45 gemäß Doppelpfeil 46 in und entgegen der Einpressrichtung 23 verschiebbar gelagerten Betätigungskolben 47, mit dem eine axial aus dem Zylindergehäuse 45 herausragende Kolbenstange 48 verbunden ist. Der Schlagantrieb 44 sitzt zwischen dem Drückantrieb 15 und der Presspinole 24, wobei die Kolbenstange 48 in Richtung zur Presspinole 24 ragt, zu der sie koaxial ist.

Der den Schlagantrieb 44 bildende Pneumatikzylinder ist nach Art eines sogenannten Kurzhubzylinders aufgebaut und könnte eine eigenständige Antriebseinrichtung sein, die an der Drückeinheit 22 mittels geeigneter Befestigungsmittel festgelegt ist. Beim Ausführungsbeispiel ist der pneumatische Schlagantrieb 44 so in die Drückeinheit 22 integriert, dass die Drückeinheit 22 selbst das Zylindergehäuse 45 bildet. Dies ermöglicht besonders kompakte Abmessungen bei zugleich einfacher Herstellung.

Der Betätigungskolben 47 teilt zwei Arbeitskammern voneinander ab, die über zugeordnete Anschlussöffnungen 52 in gesteuerter Weise mit Druckluft beaufschlagbar oder entlüftbar sind. Auf diese Weise kann die Kolbenbewegung 46 relativ zur Drückeinheit 22 hervorgerufen werden.

Die Schlagvorrichtung 43 enthält des Weiteren einen mit einer ausreichenden Trägheitsmasse versehenen Hammerkörper 53, der durch den pneumatischen Schlagantrieb 44 zu einer in und entgegen der Einpressrichtung 23 hin- und hergehenden Schlagbewegung 54 relativ zur Drückeinheit 22 angetrieben werden kann. Der Hammerkörper 53 sitzt axial zwischen der Presspinole 24 und dem von einem Linearantrieb gebildeten pneumatischen Schlagantrieb 44, wobei er an der Kolbenstange 48 des Schlagantriebes 44 befestigt ist und deren Bewegung mitmacht.

Der Hammerkörper 53 ist an oder in der Drückeinheit 22 verschiebbar geführt. Beim Ausführungsbeispiel ist er zylindrisch ausgebildet und in einer hohlzylindrischen Führungskammer 55 der Drückeinheit 22 verschiebbar gelagert. Die damit bewirkte Querabstützung verhindert Querbelastungen der Kolbenstange 48 und garantiert eine hohe Lebensdauer für den Schlagantrieb 44. Bei Bedarf kann die Funktion des Betätigungskolbens 47 unmittelbar in den Hammerkörper 53 integriert sein, sodass ein gesonderter Betätigungskolben entfallen kann.

Beim Ausführungsbeispiel ist somit die gesamte Schlagvorrichtung 43 platzsparend in die Drückeinheit 22 integriert. Außerdem ist die Schlagvorrichtung 43 zweckmäßigerweise koaxial zu der Drückeinheit 22 angeordnet. Insgesamt ergibt sich eine lineare Reihenschaltung der Presspinole 24, des pneumatischen Schlagantriebes 44 und des dazwischen angeordneten Hammerkörpers 53.

Der Hammerkörper 53 hat an seiner in Einpressrichtung 23 weisenden Vorderseite eine Schlagfläche 56, der eine zugewandte zweite Beaufschlagungsfläche 57 der Presspinole 24 gegenüberliegt. Die zweite Beaufschlagungsfläche 57 befindet sich zweckmäßigerweise am rückwärtigen Endabschnitt der Presspinole 24, der in die Führungskammer 55 hineinragt. Sie ist beim Ausführungsbeispiel an einem radial über den Lagerabschnitt 25 vorstehenden Beaufschlagungsbund 58 vorgesehen, der das rückwärtige Ende der Presspinole 24 bildet. Zweckmäßigerweise kooperiert die Federeinrichtung 42 mit dem Beaufschlagungsbund 58 der Presspinole 24.

Der Beaufschlagungsbund 58 bildet gleichzeitig einen Anschlag zur Begrenzung der Ausfahrbewegung der Presspinole 24 in der Einpressrichtung 23 bezüglich der Drückeinheit 22.

Liegt die erste Beaufschlagungsfläche 36 der Presspinole 24 an der Drückfläche 38 der Drückeinheit 22 an, ist gleichzeitig der Beaufschlagungsbund 58 ein Stück weit axial von der zugeordneten axialen Begrenzungsfläche 62 der Führungskammer 55 abgehoben. Durch Einwirkung auf die zweite Beaufschlagungsfläche 57 lässt sich die Presspinole 24 in der Einpressrichtung 23 relativ zur Drückeinheit 22 verlagern, wobei die erste Beaufschlagungsfläche 36 von der Drückfläche 38 abrückt. Begrenzt wird diese Bewegung durch das Auftreffen des Beaufschlagungsbundes 38 oder alternativ eines anderen pinolenseitigen Anschlagelementes auf die Drückeinheit 22. Bei dieser Auslenkung wird die Federeinrichtung 42 komprimiert, die nach Wegnahme der Stellkraft den Ausgangszustand wiederherstellt.

Die Einpressvorrichtung 1 ist mit einer lediglich in Figur 1 und auch dort nur schematisch angedeuteten Ansteuereinrichtung 63 ausgestattet. Diese koordiniert den Betrieb der Drückvorrichtung 14 und der Schlagvorrichtung 43. Die Art und Weise der Koordination ergibt sich aus der nachfolgenden Beschreibung einer bevorzugten Betriebsweise der Einpressvorrichtung 1.

In der aus Figur 1 hervorgehenden Grundstellung ist die Drückeinheit 22 durch den Drückantrieb 15 zurückgezogen, sodass die Presspinole 24 außer Eingriff mit dem Werkstück 4 steht und das Einsatzteil 2 an der Aufnahme 28 fixiert werden kann. Auch der pneumatische schlagantrieb 44 nimmt eine Ausgangsstellung ein, bei der die Kolbenstange 48 eingefahren ist und ein relativ großer Abstand zwischen der Schlagfläche 56 und der zweiten Beaufschlagungsfläche 57 vorliegt.

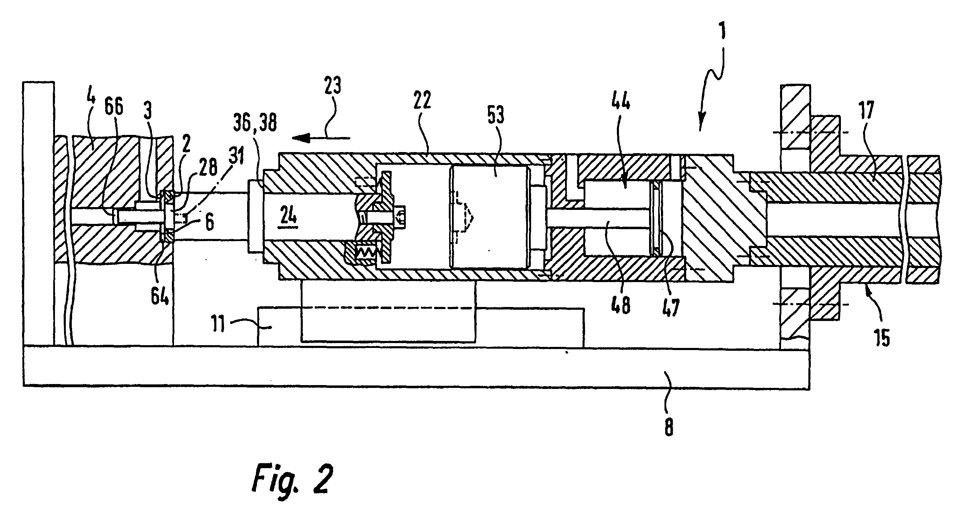

Als nächstes aktiviert die Ansteuereinrichtung 63 den Drückantrieb 15, sodass dessen Antriebsteil 17 ausfährt und die Drückeinheit 22 in Einpressrichtung 23 vorwärts schiebt. Dabei taucht nach einer gewissen Hubstrecke das an der Aufnahme 28 fixierte Einsatzteil 2 in die Ausnehmung 3 des Werkstückes 4 ein. Durch die von dem Drückantrieb 15 erzeugte Drückkraft wird das Einsatzteil 2 in die Ausnehmung 3 bis zu einem Maximalwert eingepresst. Dieser Einpressvorgang findet im Rahmen einer kontinuierlichen Bewegung statt, die man als Drückphase bezeichnen kann. Die Figur 2 zeigt den Zustand gegen Ende der Drückphase, wobei übertrieben ein verbleibender Spalt 64 zwischen dem Einsatzteil 2 und der Grundfläche 6 der Ausnehmung 3 ersichtlich ist. Dieser Spalt 64, der in der Regel minimal ist, rührt davon her, dass mit der kontinuierlich aufgebrachten Drückkraft keine absolut feste axiale Anlage zwischen dem Einsatzteil 2 und der Grundfläche 6 der Ausnehmung 3 erzielbar ist.

Der von der Drückeinheit 22 ausgeführte Drückhub wird durch die Ansteuereinrichtung 63 vorgegeben und durch nicht näher dargestellte Sensormittel überwacht.

Während der Drückphase erfolgt der Kraftfluss vom Drückantrieb 15 über die Drückeinheit 22 und die an der ersten Beaufschlagungsfläche 36 anliegende Drückfläche 38 auf die Presspinole 24, wobei die Schlagvorrichtung 43 kräftemäßig umgangen wird.

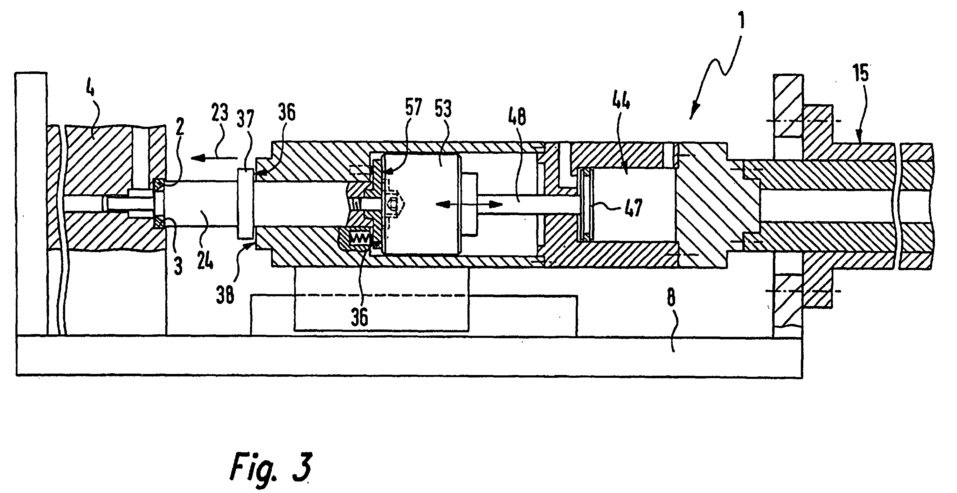

Ist die Drückphase beendet, beginnt eine in Figur 3 angedeutete Hämmerphase als Abschluss des Einpressvorganges. Diese findet unter Beibehaltung der am Ende der Drückphase gemäß Figur 2 eingenommenen Endstellung der Drückeinheit 22 statt. Hier wird nun der während der Drückphase ständig die Ausgangsstellung einnehmende pneumatische Schlagantrieb 44 durch die Ansteuereinrichtung 63 aktiviert, wobei die Ansteuereinrichtung 63 über nicht näher dargestellte Steuerventile sowie über Sensoren 65 zur Positionserfassung des Betätigungskolbens 47 verfügt.

In der Hämmerphase werden durch die Schlagvorrichtung mit hohem Impuls und in rascher Folge Schläge auf die relativ zur Drückeinheit 22 in der Einpressrichtung 23 bewegbare Presspinole 24 ausgeübt. Im Einzelnen wird dabei der Hammerkörper 53 durch den pneumatischen Schlagantrieb 44 zu der oszillierenden linearen Schlagbewegung 54 angetrieben, bei der er in rascher Folge mit seiner Schlagfläche 56 Hammerschläge auf die zweite Beaufschlagungsfläche 57 der Presspinole 24 ausübt. Bedingt durch das axiale Bewegungsspiel zwischen der Presspinole 24 und der Drückeinheit 22 kann die Presspinole 24 dabei geringfügig nach vorne aus der Drückeinheit 22 ausfahren, wobei die erste Beaufschlagungsfläche 36 von der Drückfläche 38 abhebt. Damit verbunden ist ein durch Hämmern unterstütztes Einpressen des Einsatzteils 2, das mithin satt und ohne jeglichen Zwischenraum an der Grundfläche 6 der Ausnehmung 3 zur Anlage gelangt. Die Figur 3 zeigt einen Zustand, bei dem der pneumatische Schlagantrieb 44 eine Endstellung einnimmt, die sich dadurch auszeichnet, dass der Betätigungskolben 47 den Hammerkörper 53 in Einpressrichtung 23 verlagert hat, sodass dieser auf der Rückseite der Presspinole 24 auftrifft.

Es kann für die nachfolgende Hämmerphase vorteilhaft sein, durch die Ansteuereinrichtung 63 den oben genannten Maximalwert der während der Drückphase erzielbaren Einpressstiefe des Einsatzteils 2 derart kontrolliert vorzugeben, dass am Ende der Drückphase auf jeden Fall noch ein gewisser axialer Spalt zwischen dem Einsatzteil 2 und der Grundfläche 6 der Ausnehmung 3 vorliegt.

Durch die Ansteuereinrichtung 63 wird die Anzahl der Hämmerzyklen entsprechend vorher ermittelten Erfahrungswerten vorgegeben.

Nach Beendigung der Hämmerphase ist das Einsatzteil 2 in der gewünschten Weise in die Ausnehmung 3 eingepresst, sodass der pneumatische Schlagantrieb 44 in die Ausgangsstellung zurückfährt und die Drückeinheit 22 durch den Drückantrieb 15 in die Grundstellung gemäß Figur 1 zurückgezogen wird. Dabei fährt die Presspinole 24 aus dem Werkstück 4 aus, einschließlich eines der Ausnehmung 3 stirnseitig vorgelagerten Führungsfortsatzes 66, der während der Drückphase gemäß Figur 2 voreilend in den Führungskanal 7 des Werkstückes 4 eintaucht, um ein exakt lagezentriertes Ansetzen des Einsatzteils 2 an der Öffnung der Ausnehmung 3 zu gewährleisten.

Nun kann die Presspinole 24 erneut mit einem Einsatzteil 2 bestückt werden, um einen weiteren Einpressvorgang durchzuführen.

Das Ende der Hämmerphase kann in vorteilhafter Weise auch dadurch vorgegeben werden, dass man die gewünschte Anlageposition, bei der das Einsatzteil 2 in der gewünschten Weise satt an der Grundfläche 6 der Ausnehmung 3 anliegt, durch geeignete Sensormittel 67a, 67b der Einpressvorrichtung 1 erfasst. Mögliche Ausführungsformen für solche Sensormittel 67a, 67b sind in Figur 1 strichpunktiert angedeutet.

Im Falle der Sensormittel 67a handelt es sich um eine Ausführungsform, die in der Lage ist, die gewünschte Anlageposition des Einsatzteils 2 akustisch anhand des Hämmergeräusches zu erfassen, welches entsteht, wenn der Hammerkörper 53 über die Presspinole 24 hämmernd auf das Einsatzteil 2 einwirkt. Die Sensormittel 67a sind insbesondere so ausgebildet, dass sie das momentane Tonfrequenzspektrum des Hämmervorganges aufnehmen können, beispielsweise durch ein geeignet platziertes Mikrophon 68. Erfahrungsgemäß stellt sich eine Erhöhung der Tonlage ein, wenn das Einsatzteil 2 satt an der Grundfläche 6 der Ausnehmung 3 anliegt und dadurch dem Hämmervorgang ein massiver Widerstand entgegengesetzt wird. Diese signifikante Änderung in der Tonhöhe lässt sich als Kennmerkmal für das Erreichen der Anlageposition verifizieren.

Zweckmäßigerweise verfügt die Ansteuereinrichtung 63 über einen Speicher, in dem ein Soll-Tonfrequenzspektrum abgespeichert ist, das während des Hämmervorganges laufend mit dem durch die Sensormittel 67a erfassten Ist-Tonfrequenzspektrum verglichen wird. Hierzu kann die Ansteuereinrichtung 63 über geeignete Vergleichesmittel verfügen. Wird bei diesem laufenden Vergleich eine Übereinstimmung festgestellt oder ein Übersteigen der Höhe des Soll-Tonfrequenzspektrums durch das Ist-Tonfrequenzspektrum, veranlasst die Ansteuereinrichtung 63 die Stillsetzung des pneumatischen Schlagantriebes 44 und somit den Abbruch des Hämmervorgangs. Auf diese Weise kann der gesamte Einpressvorgang sehr zeitsparend ausgeführt werden, weil die Hämmerphase nicht länger andauert, als unbedingt notwendig.

Der Sollwert des Tonfrequenzspektrums kann zuvor in einem Referenz-Einpressvorgang aufgenommen und abgespeichert werden. Auf diese Weise kann spezifischen, werkstückabhängigen Frequenzspektren flexibel Rechnung getragen werden.

Eine vergleichbare Arbeitsweise der Ansteuereinrichtung 63 ist möglich, wenn zusätzlich oder alternativ Sensormittel 67b vorgesehen sind, die die gewünschte Anlageposition des Einsatzteils 2 auf der Basis des zwischen dem Einsatzteil 2 und dem Werkstück 4 herrschenden elektrischen Übergangswiderstands bestimmen. Beim Ausführungsbeispiel wird zu diesem Zweck zum einen das Werkstück 4 und zum anderen das einzupressende Einsatzteil 2 jeweils gesondert mittelbar oder unmittelbar elektrisch kontaktiert, wobei entsprechende elektrische Leiter bei 69 angedeutet sind. Die elektrische Kontaktierung der genannten Komponenten geschieht bevorzugt mittelbar, indem ein elektrischer Leiter 69 beispielsweise an die vom Werkstück 4 kontaktierten Abstützmittel 12 oder an nicht näher gezeigte Befestigungsmittel für das Werkstück 4 angeschlossen ist, während ein weiterer elektrischer Leiter 69 mit der Drückeinheit 22 und insbesondere mit der Presspinole 24 verbunden ist. Die beiden elektrischen Leiter 69 sind an die Ansteuereinrichtung 63 angeschlossen, die über nicht näher gezeigte Messmittel verfügt, welche den elektrischen Widerstand zwischen den beiden elektrischen Leitern 69 messen. Dieser elektrische Widerstand wird maßgeblich durch den Übergangswiderstand bestimmt, der sich durch den Kontakt zwischen dem Einsatzteil 2 und dem Werkstück 4 beim Einpressvorgang einstellt.

Solange das Einsatzteil 2 noch nicht an der Grundfläche 6 der Ausnehmung 3 anliegt, besteht lediglich im Bereich der Mantelfläche des Einsatzteils 2 ein Kontakt zwischen dem Einsatzteil 2 und dem Werkstück 4. Sobald jedoch das Einsatzteil 2 zusätzlich auch an der Grundfläche 6 anliegt, vergrößert sich die Kontaktfläche, mit der Folge, dass der elektrische Übergangswiderstand zwischen dem Einsatzteil 2 und dem Werkstück 4 für den über die elektrischen Leiter 69 fließenden Strom herabgesetzt wird. Der Übergangswiderstand hat ein Minimum, wenn das Einsatzteil 2 satt an der Grundfläche 6 anliegt.

Durch einen Vergleich mit einem vorher ermittelten und abgespeicherten Soll-Übergangswiderstand lässt sich somit anhand des momentan gemessenen Ist-Übergangswiderstandes genau feststellen, wenn das Einsatzteil 2 die gewünschte Anlageposition erreicht hat.

Prinzipiell wären auch noch weitere Detektionsmethoden zur Ermittlung der Anlageposition möglich, beispielsweise auch optischer Art. Die beschriebenen Ausführungsformen lassen sich jedoch besonders einfach realisieren, bei gleichzeitig sehr zuverlässiger Arbeitsweise.

## Patentansprüche

1. Einpressvorrichtung zum Einpressen eines insbesondere von einem Ventilsitzring gebildeten Einsatzteils (2) in eine Ausnehmung (3) eines insbesondere von einem Zylinderkopfkörper gebildeten Werkstücks (4), mit einer Drückvorrichtung (14), die einen Drückantrieb (15) enthält und eine durch den Drückantrieb (15) zu einer Drückbewegung in einer Einpressrichtung (23) antreibbare Drückeinheit (22) aufweist, die drückend auf eine Presspinole (24) einwirken kann, an der das einzupressende Einsatzteil (2) fixierbar ist, und mit einer Schlagvorrichtung (43) zum Ausüben von Schlägen auf die relativ zur Drückeinheit (22) in der Einpressrichtung (23) bewegbare Presspinole (24) zur Unterstützung des Einpressvorganges, wobei die Schlagvorrichtung (43) einen von dem Drückantrieb (15) unabhängigen, eigenständigen pneumatischen Schlagantrieb (44) aufweist, der mit der Drückeinheit (22) bewegungsgekoppelt ist und der für den hin- und hergehenden Antrieb eines relativ zur Drückeinheit (22) bewegbaren Hammerkörpers (53) vorgesehen ist, der in der Einpressrichtung (23) hämmernd auf die Presspinole (24) einwirken kann, **dadurch gekennzeichnet, dass** die Presspinole an der Drückeinheit (22) gelagert ist.

2. Einpressvorrichtung nach Anspruch 1, **dadurch gekennzeichnet, dass** der Drückantrieb (15) ein elektrischer Antrieb ist und insbesondere als Servomotorantrieb ausgebildet ist.

3. Einpressvorrichtung nach Anspruch 1 oder 2, **dadurch gekennzeichnet, dass** der pneumatische Schlagantrieb (44) ein Pneumatikzylinder ist, an dessen Kolbenstange (48) der Hammerkörper (53) angeordnet ist.

4. Einpressvorrichtung nach einem der Ansprüche 1 bis 3, **dadurch gekennzeichnet, dass** die Schlagvorrichtung (43) in die Drückeinheit (22) integriert ist.

5. Einpressvorrichtung nach einem der Ansprüche 1 bis 4, **dadurch gekennzeichnet, dass** die Schlagvorrichtung (43) koaxial zu der Drückeinheit (22) angeordnet ist.

6. Einpressvorrichtung nach einem der Ansprüche 1 bis 5, **dadurch gekennzeichnet, dass** die Drückeinheit (22) das Gehäuse (45) des pneumatischen Schlagantriebes (44) bildet.

7. Einpressvorrichtung nach einem der Ansprüche 1 bis 6, **dadurch gekennzeichnet, dass** der Hammerkörper (53) an oder in der Drückeinheit (22) hin und her verschiebbar geführt ist.

8. Einpressvorrichtung nach einem der Ansprüche 1 bis 7, **gekennzeichnet durch** eine Halterung (8), an der Drückantrieb (15) befestigt ist und an der die Drückeinheit (22) mittels einer Linearführung (11) in und entgegen der Einpressrichtung (23) verstellbar geführt ist.

9. Einpressvorrichtung nach einem der Ansprüche 1 bis 8, **dadurch gekennzeichnet, dass** an der Presspinole (24) eine entgegen der Einpressrichtung (23) weisende erste Beaufschlagungsfläche (36) vorgesehen ist, die bei der Drückbewegung der Drückeinheit (22) von einer in der Einpressrichtung (23) weisenden Drückfläche (38) der Drückeinheit (22) beaufschlagbar ist und die bei der hämmernden Beaufschlagung der Presspinole (24) von der Drückfläche (38) abrücken kann.

10. Einpressvorrichtung nach Anspruch 9, **gekennzeichnet durch** eine zwischen der Drückeinheit (22) und der Presspinole (24) wirkende Federeinrichtung (42), die Presspinole (24) im Sinne einer Annäherung ihrer ersten Beaufschlagungsfläche (36) an die Drückfläche (38) beaufschlagt.

11. Einpressvorrichtung nach einem der Ansprüche 1 bis 10, **dadurch gekennzeichnet, dass** an der Presspinole (24) eine entgegen der Einpressrichtung (23) weisende zweite Beaufschlagungsfläche (57) vorgesehen ist, die dem Hammerkörper (53) zugewandt und von diesem beaufschlagbar ist.

12. Einpressvorrichtung nach einem der Ansprüche 1 bis 11, **gekennzeichnet durch** einer lineare Hintereinander-Anordnung der Presspinole (24), des Hammerkörpers (53) und des pneumatischen Schlagantriebes (44).

13. Einpressvorrichtung nach einem der Ansprüche 1 bis 12, **dadurch gekennzeichnet, dass** die Presspinole (24) eine Aufnahme (28) zur lösbaren Fixierung ringförmiger Einsatzteile (2) aufweist.

14. Einpressvorrichtung nach einem der Ansprüche 1 bis 13, **gekennzeichnet durch** Sensormittel (67a, 67b) zur Erfassung einer Anlageposition, in der das einzupressende Einsatzteil (2) nach einer Hämmerphase satt an einer Grundfläche (6) der Ausnehmung (3) anliegt.

15. Einpressvorrichtung nach Anspruch 14, **dadurch gekennzeichnet, dass** die Sensormittel (67a) ausgebildet sind, um die Anlageposition akustisch anhand des Hämmergeräusches zu erfassen, insbesondere anhand des momentanen Tonfrequenzspektrums des Hämmervorgangs.

16. Einpressvorrichtung nach Anspruch 14 oder 15, **dadurch gekennzeichnet, dass** die Sensormittel (67b) ausgebildet sind, um die Anlageposition anhand des zwischen dem Einsatzteil (2) und dem Werkstück (4) herrschenden elektrischen Übergangswiderstandes zu erfassen.

17. Einpressvorrichtung nach einem der Ansprüche 1 bis 16, **gekennzeichnet durch** eine Ansteuereinrichtung (63) für den Drückantrieb (15) und den pneumatischen Schlagantrieb (44), die eine dahingehende Ansteuerung vornehmen kann, dass zunächst der Drückantrieb (15) einen Drückhub der Drückeinheit (22) hervorruft und anschließend, bei stillstehender Drückeinheit (22), der Schlagantrieb (44) hämmernd auf die Presspinole (24) einwirkt.

18. Einpressvorrichtung nach Anspruch 17 in Verbindung mit einem der Ansprüche 14 bis 16, **dadurch gekennzeichnet, dass** die Ansteuereinrichtung (63) ausgebildet ist, um nach dem durch die Sensormittel (67) erfolgten Feststellen der Anlageposition die Hämmerphase abzubrechen.

## Claims

1. Pressing-in apparatus, for pressing an insert part (2) formed in particular by a valve seat ring into a recess (3) of a workpiece (4) formed in particular by a cylinder head body, having a press fixture (14) containing a press drive (15) and also a press unit (22) drivable by the press drive (15) to make a pressing movement in a direction of pressing-in (23), said press unit being able to act with pressure on a press sleeve (24) to which the insert part (2) for pressing-in may be fixed, and with a striking device (43) to exert blows on the press sleeve (24), which is able to move relative to the press unit (22) in the direction of pressing-in (23), to support the pressing-in process, wherein the striking device (43) has a stand-alone pneumatic impact drive (44), independent of the press drive (15), which is movement-coupled to the press unit (22) and is provided for the to-and-fro movement of a hammer body (53) movable relative to the press unit (22) and able to act in the direction of pressing-in (23) by hammering on the press sleeve (24), **characterised in that** the press sleeve is mounted on the press unit (22).

2. Pressing-in apparatus according to claim 1, **characterised in that** the press drive (15) is an electrical drive and in particular is in the form of a servomotor drive.

3. Pressing-in apparatus according to claim 1 or 2, **characterised in that** the pneumatic impact drive (44) is a pneumatic cylinder, with the hammer body (53) located on its piston rod (48).

4. Pressing-in apparatus according to any of claims 1 to 3, **characterised in that** the striking device (43) is integrated in the press unit (22).

5. Pressing-in apparatus according to any of claims 1 to 4, **characterised in that** the striking device (43) is arranged coaxially to the press unit (22).

6. Pressing-in apparatus according to any of claims 1 to 5, **characterised in that** the press unit (22) forms the housing (45) of the pneumatic impact drive (44).

7. Pressing-in apparatus according to any of claims 1 to 6, **characterised in that** the hammer body (53) is guided so as to slide to and fro on or in the press unit (22).

8. Pressing-in apparatus according to any of claims 1 to 7, **characterised by** a support (8) to which the press drive (15) is fastened and on which the press unit (22) is adjustably guided in and against the direction of pressing-in (23) by means of a linear guide (11).

9. Pressing-in apparatus according to any of claims 1 to 8, **characterised in that** there is provided on the press sleeve (24) a first pressure-loading surface (36) pointing away from the direction of pressing-in (23) and which, during the pressing movement of the press unit (22), may be loaded by a pressing surface (38) of the press unit (22) pointing in the direction of pressing-in (23), and may be moved away from the pressing surface (38) during the hammering action of the press sleeve (24).

10. Pressing-in apparatus according to claim 9, **characterised by** a spring device (42) acting between the press unit (22) and the press sleeve (24), which biases the press sleeve (24) to approach the pressing surface (38) with its first pressure-loading surface (36).

11. Pressing-in apparatus according to any of claims 1 to 10, **characterised in that** the press sleeve (24) is provided with a second pressure-loading surface (57) pointing away from the direction of pressing-in (23), which faces the hammer body (53) and may be subject to loading by the latter.

12. Pressing-in apparatus according to any of claims 1 to 11, **characterised by** a linear consecutive arrangement of the press sleeve (24), the hammer body (53) and the pneumatic impact drive (44).

13. Pressing-in apparatus according to any of claims 1 to 12, **characterised in that** the press sleeve (24) has a receptacle (28) for releasable fixing of annular insert parts (2).

14. Pressing-in apparatus according to any of claims 1 to 13, **characterised by** sensor means (67a, 67b) for the detection of a contact position in which, after a hammering phase, the insert part (2) to be pressed in fits snugly against a base surface (6) of the recess (3).

15. Pressing-in apparatus according to claim 14, **characterised in that** the sensor means (67a) are designed to detect the contact position acoustically with the aid of the hammering sound, in particular using the momentary audible spectrum of the hammering process.

16. Pressing-in apparatus according to claim 14 or 15, **characterised in that** the sensor means (67b) are designed to detect the contact position with the aid of the electrical transition resistance prevailing between the insert part (2) and the workpiece (4).

17. Pressing-in apparatus according to any of claims 1 to 16, **characterised by** a drive unit (63) for the press drive (15) and the pneumatic impact drive (44) which may drive with the effect that firstly the press drive (15) generates a pressure stroke of the press unit (22) and then, with the press unit (22) at a stand, the impact drive (44) hammers on the press sleeve (24).

18. Pressing-in apparatus according to claim 17 in conjunction with any of claims 14 to 16, **characterised in that** the drive unit (63) is designed to cease the hammering phase when the sensor means (67) gave determined the contact position.

## Revendications

1. Dispositif d'emmanchement pour emmancher un insert (2) formé en particulier par une bague de siège de soupape, dans un évidement (3) d'une pièce (4) formée en particulier par un corps de culasse, comportant un dispositif d'enfoncement (14) qui contient une commande d'enfoncement (15) et une unité d'enfoncement (22) pouvant être entraînée par la commande d'enfoncement (15) en un mouvement d'enfoncement dans une direction d'emmanchement (23), laquelle unité peut agir par enfoncement sur un fourreau de presse (24) sur laquelle l'insert (2) à emmancher peut être fixé, et comportant un dispositif de percussion (43) pour exercer des percussions sur le fourreau de presse (24) déplaçable vers l'unité d'enfoncement (22) dans la direction d'emmanchement (23), afin de soutenir le processus d'emmanchement, le dispositif de percussion (43) comportant un mécanisme de percussion (44) pneumatique autonome, indépendant de la commande d'enfoncement (15) et qui est couplé en mouvement avec l'unité d'enfoncement (22) et est prévu pour l'entraînement en sens alternés d'un corps de marteau (53) déplaçable par rapport à l'unité d'enfoncement (22), lequel corps de marteau peut agir dans la direction d'emmanchement (23) par martèlement sur le fourreau de presse (24), **caractérisé en ce que** le fourreau de presse est monté sur l'unité d'enfoncement (22).

2. Dispositif d'emmanchement selon la revendication 1, **caractérisé en ce que** la commande d'enfoncement (15) est un dispositif d'entraînement électrique et est réalisée en particulier comme un servomoteur.

3. Dispositif d'emmanchement selon la revendication 1 ou 2, **caractérisé en ce que** la commande de percussion pneumatique (44) est un vérin pneumatique sur la tige de piston (48) duquel est disposé le corps de martèlement (53).

4. Dispositif d'emmanchement selon l'une des revendications 1 à 3, **caractérisé en ce que** le dispositif de percussion (43) est intégré à l'unité d'enfoncement (22).

5. Dispositif d'emmanchement selon l'une des revendications 1 à 4, **caractérisé en ce que** le dispositif de percussion (43) est disposé coaxialement à l'unité d'enfoncement (22).

6. Dispositif d'emmanchement selon l'une des revendications 1 à 5, **caractérisé en ce que** l'unité d'enfoncement (22) forme le carter (45) de la commande de percussion pneumatique (44).

7. Dispositif d'emmanchement selon l'une des revendications 1 à 6, **caractérisé en ce que** le corps de martèlement (53) est guidé sur ou dans l'unité d'enfoncement (22), de manière à pouvoir coulisser en sens alternés.

8. Dispositif d'emmanchement selon l'une des revendications 1 à 7, **caractérisé par** une fixation (8) sur laquelle est fixée la commande d'enfoncement (15) et sur laquelle l'unité d'enfoncement (22) est guidée, au moyen d'un guide linéaire (11), de façon à pouvoir se déplacer dans la direction d'emmanchement (23) et en direction contraire.

9. Dispositif d'emmanchement selon l'une des revendications 1 à 8, **caractérisé en ce que** sur le fourreau de presse (24) est prévue une première surface d'action (36) dirigée dans la direction contraire à la direction d'emmanchement (23), laquelle peut être sollicitée, lors du mouvement d'enfoncement de l'unité d'enfoncement (22), par une surface d'enfoncement (38), dirigée dans la direction d'emmanchement (23), de l'unité d'enfoncement (22), et qui sous l'action de martèlement du fourreau de presse (24), peut se retirer de la surface d'enfoncement (38).

10. Dispositif d'emmanchement selon la revendication 9, **caractérisé par** un dispositif à ressort (42), agissant entre l'unité d'enfoncement (22) et le fourreau de presse (24), qui agit sur le fourreau de presse (24) de manière que sa première surface d'action (36) s'approche de la surface d'enfoncement (38).

11. Dispositif d'emmanchement selon l'une des revendications 1 à 10, **caractérisé en ce que** sur le fourreau de presse (24) est prévue une deuxième surface d'action (57), dirigée dans la direction contraire à la direction d'emmanchement (23), qui est tournée vers le corps de martèlement (53) et peut être sollicitée par celui-ci.

12. Dispositif d'emmanchement selon l'une des revendications 1 à 11, **caractérisé par** une disposition linéaire successive du fourreau de presse (24), du corps de martèlement (53) et de la commande de percussion pneumatique (44).

13. Dispositif d'emmanchement selon l'une des revendications 1 à 12, **caractérisé en ce que** le fourreau de presse (24) présente un logement (28) pour la fixation séparable d'inserts (2) de forme annulaire.

14. Dispositif d'emmanchement selon l'une des revendications 1 à 13, **caractérisé par** des moyens de détection (67a, 67b) pour détecter une position de contact dans laquelle l'insert (2) à emmancher s'applique, après une phase de martèlement, tout contre une surface de fond (6) de l'évidement (3).

15. Dispositif d'emmanchement selon la revendication 14, **caractérisé en ce que** les moyens de détection (67a) sont conçus pour détecter la position de contact de façon acoustique, à l'aide du bruit de martèlement, en particulier à l'aide du spectre de fréquence sonore instantanée de l'opération de martèlement.

16. Dispositif d'emmanchement selon la revendication 14 ou 15, **caractérisé en ce que** les moyens de détection (67b) sont conçus pour détecter la position de contact à l'aide de la résistance électrique de contact régnant entre l'insert (2) et la pièce (4).

17. Dispositif d'emmanchement selon l'une des revendications 1 à 16, **caractérisé par** un dispositif de pilotage (63) pour la commande d'enfoncement (15) et la commande de percussion pneumatique (44), qui peut procéder à un pilotage par le fait que la commande d'enfoncement (15) provoque d'abord une course d'enfoncement de l'unité d'enfoncement (22) puis, lorsque l'unité d'enfoncement (22) est à l'arrêt, la commande de percusion (44) agit par martèlement sur le fourreau de presse (24).

18. Dispositif d'emmanchement selon la revendication 17 en combinaison avec l'une des revendications 14 à 16, **caractérisé en ce que** le dispositif de pilotage (63) est conçu pour interrompre la phase de martèlement après que les moyens de détection (67) ont constaté la position de contact.
